# EUROPÄISCHE PATENTANMELDUNG

(11) **EP 1 954 018 A2**
(43) Veröffentlichungstag der Anmeldung: **06.08.2008**
(21) Anmeldenummer: 08001934.2
(22) Anmeldetag: 01.02.2008
(51) Int. Cl.: H04M 3/436, H04M 3/42

(54) **Verfahren und Einrichtung zum Steuern des Aufbaus von Kommunikationsverbindungen**

(30) Priorität: 01.02.2007 DE 102007005914
(71) Anmelder: Vodafone Holding GmbH, 40213 Düsseldorf (DE)
(72) Erfinder: Rissanen, Jussi, 40211 Düsseldorf (DE); Malekzadeh, Feridoon, Seattle WA 98103 (US); Degen, Helmut, 40470 Düsseldorf (DE); Clavin, Neil, 40211 Düsseldorf (DE)
(74) Vertreter: Jostarndt, Hans-Dieter

(57) **Zusammenfassung**

Die Erfindung betrifft ein Verfahren zum Steuern eines durch einen A-Teilnehmer angeforderten Aufbaus einer Kommunikationsverbindung zu einem B-Teilnehmer innerhalb eines mehrere Kommunikationsdienste zur Verfügung stellenden Kommunikationsnetzwerks.

Bei dem vorgeschlagenen Verfahren werden anhand von vorgebbaren Reaktionsmodi Reaktionen auf Anforderungen für den Aufbau einer Kommunikationsverbindung zu dem B-Teilnehmer festgelegt, wobei in Bezug auf unterschiedliche Kommunikatiorisdienste verschiedene Reaktionsmodi festgelegt werden können. Aufgrund einer Anforderung des A-Teilnehmers für den Aufbau einer Kommunikationsverbindung zu dem B-Teilnehmer wird im Rahmen eines Kommunikationsdienstes der für diesen Kommunikationsdienst maßgebliche Reaktionsmodus ermittelt und die Anforderung für den Aufbau der Kommunikationsverbindung zu dem B-Teilnehmer nach Maßgabe des ermittelten Reaktionsmodus reagiert.

Darüber hinaus betrifft die Erfindung eine zur Durchführung des Verfahrens geeignete Einrichtung.

## Beschreibung

### Technisches Gebiet

Die Erfindung betrifft ein Verfahren und eine Einrichtung zum Steuern eines durch einen A-Teilnehmer angeforderten Aufbaus einer Kommunikationsverbindung zu einem B-Teilnehmer innerhalb eines mehrere Kommunikationsdienste zur Verfügung stellenden Kommunikationsnetzwerks.

### Hintergrund der Erfindung

In modernen Kommunikationsnetzwerken, wie beispielsweise Mobilfunknetzen, drahtgebundenen Femersprechnetzen und Datennetzen, steht in der Regel eine Vielzahl von Kommunikationsdiensten zur Übertragung von Sprach- und/oder Datennachrichten von einem A-Teilnehmer zu einem B-Teilnehmer zur Verfügung. Beispiele für derartige Dienste sind Dienste für Sprach- oder Videoanrufe, so genannte Mailboxdienste, bei denen eine Sprach- oder Videonachricht des A-Teilnehmers durch eine netzwerkseitig eingerichtete Aufnahmeeinrichtung aufgezeichnet und für den späteren Abruf durch den B-Teilnehmer bereitgehalten wird, SMS (SMS: Short Message Service), MMS (MMS: Multimedia Message Service), einen Dienst zur Übertragung von E-Mails, einen Dienst für Datentransfers, bei dem Dateien direkt an das Kommunikationsendgerät 20 des B-Teilnehmers übertragen werden und einen so genannten IM-Dienst (IM: Instant Messaging), bei dem Nachrichten im Rahmen eines Chats in Echtzeit zwischen dem A- und dem B-Teilnehmer ausgetauscht werden.

Die verschiedenen Kommunikationsdienste stellen unterschiedliche Anforderungen an den B-Teilnehmer. So bedürfen beispielsweise Sprach- oder Videoanrufe in der Regel einer unmittelbaren Beantwortung bzw. Annahme während der B-Teilnehmer von Datennachrichten, die im Rahmen entsprechender Kommunikationsdienste an den B-Teilnehmer übertragen werden, in der Regel in einem von ihm gewählten Zeitpunkt Kenntnis nehmen kann. In bestimmten Situationen, in denen der B-Teilnehmer beispielsweise nicht durch eingehende Anrufe gestört werden möchte, kann der B-Teilnehmer somit dennoch den Empfang von Nachrichten wünschen, die er in einem späteren Zeitpunkt einsehen kann.

Im Stand der Technik ist es daher insbesondere von Mobilfunkendgeräten bekannt, dass der B-Teilnehmer anhand von manuell aktivierbaren, so genannten Geräteprofilen gezielt die Art und Lautstärke von Signaltönen einstellen kann, die den Eingang einer Sprach- und/oder Datennachricht an seinem Kommunikationsendgerät signalisieren. Insbesondere kann der B-Teilnehmer auf diese Weise die Signaltöne ausschalten, so dass er nicht durch eingehende Sprachanrufe und/oder Nachrichten gestört wird. Im Hinblick auf Sprachanrufe ist in der Regel auch eine anruferspezifische Einstellung der Art und Lautstärke der Signaltöne möglich, so dass nur Anrufe bestimmter Anrufer signalisiert werden.

Anhand derartiger Gerätprofile wird jedoch lediglich die Art und Weise der Signalisierung einer eingehenden Sprach- und/oder Datennachricht festgelegt. Dies insbesondere ist mit dem Nachteil verbunden, dass der A-Teilnehmer keine Rückmeldung erhält, die eine eindeutige Feststellung zulässt, ob der B-Teilnehmer aktuell im Rahmen eines bestimmten Kommunikationsdienstes verfügbar ist oder nicht. Wenn beispielsweise ein Anruf von dem B-Teilnehmer nicht angenommen wird, erhält der Anrufer keinerlei Information darüber, ob der B-Teilnehmer aktuell nicht erreichbar ist oder ob er den Anruf beispielsweise unabsichtlich nicht angenommen hat, weil er den Signalton versehentlich nicht gehört hat.

### Darstellung der Erfindung

Es ist daher eine Aufgabe der vorliegenden Erfindung, eine dienstespezifische Festlegung der Verfügbarkeit des B-Teilnehmers für den Aufbau von Kommunikationsverbindungen zu dem B-Teilnehmer im Rahmen der in einem Kommunikationsnetzwerk zur Verfügung stehenden Kommunikationsdienste zu ermöglichen, bei welcher der A-Teilnehmer eine Information über die Verfügbarkeit des B-Teilnehmers erhält.

Erfindungsgemäß wird diese Aufgabe durch ein Verfahren mit den Merkmalen des Patentanspruchs 1 und durch eine Einrichtung mit den Merkmalen des Patentanspruchs 17 gelöst.

Demgemäß ist es vorgesehen, dass bei einem Verfahren der eingangs genannten Art anhand von vorgebbaren Reaktionsmodi Reaktionen auf Anforderungen für den Aufbau einer Kommunikationsverbindung zu dem B-Teilnehmer festgelegt werden, wobei in Bezug auf unterschiedliche Kommunikationsdienste verschiedene Reaktionsmodi festgelegt werden können. Aufgrund einer Anforderung des A-Teilnehmers für den Aufbau einer Kommunikationsverbindung zu dem B-Teilnehmer wird im Rahmen eines Kommunikationsdienstes der für diesen Kommunikationsdienst maßgebliche Reaktionsmodus ermittelt und auf die Anforderung für den Aufbau der Kommunikationsverbindung zu dem B-Teilnehmer nach Maßgabe des ermittelten Reaktionsmodus reagiert.

Ferner wird eine Einrichtung der eingangs genannten Art geschaffen, die dazu ausgebildet ist, vorgebbare Reaktionsmodi zu speichern, wobei die Reaktionsmodi Reaktionen auf Anforderungen für den Aufbau einer Kommunikationsverbindung zu dem B-Teilnehmer festlegen, wobei in Bezug auf unterschiedliche Kommunikationsdienste verschiedene Reaktionsmodi speicherbar sind. Die Einrichtung ist ferner dazu ausgebildet, aufgrund einer Anforderung des A-Teilnehmers für den Aufbau einer Kommunikationsverbindung zu dem B-Teilnehmer im Rahmen eines Kommunikationsdienstes den für diesen Kommunikationsdienst festgelegten Reaktionsmodus zu ermitteln und eine Reaktion auf die Anforderung für den Aufbau der Kommunikationsverbindung zu dem B-Teilnehmer nach Maßgabe des ermittelten Reaktionsmodus zu steuern.

Die Erfindung beinhaltet die Idee, Reaktionen auf die Anforderungen für den Aufbau einer Kommunikationsverbindung zu dem B-Teilnehmer anhand von Reaktionsmodi festzulegen. Für verschiedene zur Verfügung stehende Kommunikationsdienste können dabei vorteilhaft unterschiedliche Reaktionsmodi vorgegeben werden, nach deren Maßgabe auf die im Rahmen der verschiedenen Kommunikationsdienste auf Anforderungen für den Aufbau von kommunikationsverbindung reagiert wird. Hierdurch kann der B-Teilnehmer seine Verfügbarkeit für Aufbau bzw. den Empfang von Kommunikationsverbindungen im Rahmen der in einem Kommunikationsnetzwerk zur Verfügung stehenden Kommunikationsdienste dienstespezifisch festlegen.

Die Reaktion auf Anforderungen für den Aufbau einer Kommunikationsverbindung zu dem B-Teilnehmer wird vorteilhaft nach Maßgabe der Reaktionsmodi automatisch vorgenommen und erfolgt vorzugsweise im Wesentlichen unmittelbar nach dem Empfang der Anforderung. Ferner erfolgt die Reaktion insbesondere unabhängig von dem Gerätezustand eines Kommunikationsendgerätes des B-Teilnehmers. Anhand der Reaktion erhält der A-Teilnehmer ferner vorteilhaft eine Rückmeldung über die Verfügbarkeit des B-Teilnehmers.

Vorteilhaft umfassen die anhand der Reaktionsmodi festlegbaren Reaktionen auf die Anforderungen für den Aufbau einer Kommunikationsverbindung zu dem B-Teilnehmer insbesondere einen Aufbau der Kommunikationsverbindung zu dem B-Teilnehmer. Ferner umfassen die anhand der Reaktionsmodi festlegbaren Anforderungen auf die Anforderung für den Aufbau einer Kommunikationsverbindung zu dem B-Teilnehmer ein Abweisen der Anforderung oder einen verzögerten Aufbau der Kommunikationsverbindung zu dem B-Teilnehmer. Da die anhand der Reaktionsmodi vorgegebenen Reaktionen auf Anforderungen für den Aufbau einer Kommunikationsverbindung unabhängig von dem Gerätezustand des Kommunikationsendgeräts des B-Teilnehmers erfolgen, kann insbesondere ein Abweisen der Anforderung unabhängig davon erfolgen, ob das Kommunikationsendgerät eingeschaltet oder ausgeschaltet ist, so dass eine Anforderung auch bei eingeschaltetem Kommunikationsendgerät abgewiesen werden kann. Dies erlaubt beispielsweise das Abweisen von Anforderungen im Rahmen bestimmter Kommunikationsdienste und den Aufbau einer Kommunikationsverbindung aufgrund einer entsprechenden Anforderung im Rahmen anderer Kommunikationsdienste. Weitere mögliche Reaktionen auf eine Anforderung für den Aufbau einer Kommunikationsverbindung zu dem B-Teilnehmer im Rahmen eines Kommunikationsdienstes, die im Rahmen der Erfindung vorgesehen werden können, umfassen beispielsweise eine Umleitung der Anforderung an einen weiteren Kommunikationsdienst und eine Benachrichtigung des A-Teilnehmers und/oder des B-Teilnehmers über den Empfang der Anforderung.

Die Reaktionen auf Anforderungen für den Aufbau einer Kommunikationsverbindung können im Rahmen der Erfindung vorteilhaft sowohl durch das Netzwerk bzw. einen mit dem Netzwerk verbundenen Server gesteuert werden, als auch durch das Kommunikationsendgerät des B-Teilnehmers. Daher kann es in einer Ausführungsform der Erfindung vorgesehen sein, dass die erfindungsgemäße Einrichtung Bestandteil eines mit dem Netzwerk verbundenen Servers ist, Dies ermöglicht es insbesondere, unabhängig von dem Gerätezustand des Kommunikationsgerätes des B-Teilnehmers auf die Anforderung für den Aufbau einer Kommunikationsverbindung zu dem B-Teilnehmer zu reagieren. In einer weiteren Ausführungsform der Erfindung kann es vorgesehen sein, dass die erfindungsgemäße Einrichtung Bestandteil des Kommunikationsendgeräts des B-Teilnehmers ist.

Eine Ausgestaltung des erfindungsgemäßen Verfahrens und der erfindungsgemäßen Einrichtung sieht vor, dass in Bezug auf einen Kommunikationsdienst verschiedene Reaktionsmodi festgelegt werden können, wobei ein Reaktionsmodus nach Maßgabe wenigstens eines vorgebbaren Kriteriums aktiviert wird.

Vorteilhaft können in dieser Ausgestaltung verschiedene Reaktionen auf Anforderungen für den Aufbau von Kommunikationsverbindungen im Rahmen eines bestimmten Kommunikationsdienstes anhand von Reaktionsmodi vorgegeben werden. Welche der verschiedenen Reaktionen erfolgen soll, kann vorteilhaft anhand von vorgebbaren Kriterien festgelegt werden. Hierdurch können die Reaktionen auf eingehende Anforderungen für den Aufbau von Kommunikationsverbindungen zu dem B-Teilnehmer einfach und flexibel festgelegt werden.

Eine Ausgestaltung des erfindungsgemäßen Verfahrens und der erfindungsgemäßen Einrichtung ist dadurch gekennzeichnet, dass in Bezug auf mehrere verschiedene Kommunikationsdienste festgelegte Reaktionsmodi innerhalb eines Verfügbarkeitsprofils zusammengefasst sind, wobei die in einem Verfügbarkeitsprofil zusammengefassten Reaktionsmodi nach Maßgabe eines gemeinsamen Kriteriums aktiviert werden.

Der Vorteil dieser Ausgestaltung besteht insbesondere in einer vereinfachten Verwaltung der Reaktionsmodi, die durch eine Zusammenfassung von Reaktionsmodi, die nach Maßgabe desselben Kriteriums aktiviert werden, zu einem Verfügbarkeitsprofil erreicht wird. Die Aktivierung des Verfügbarkeitsprofils entspricht dabei der Aktivierung aller enthaltener Reaktionsmodi. Als Kriterium für eine Aktivierung des Verfügbarkeitsprofils wird vorzugsweise ein Kriterium mit räumlichem und/oder zeitlichem Bezug gewählt.

Eine Ausführungsform des erfindungsgemäßen Verfahrens und der erfindungsgemäßen Einrichtung beinhaltet, dass ein Reaktionsmodus in Abhängigkeit von einer Identität des A-Teilnehmers und/oder einer Zugehörigkeit des A-Teilnehmers zu einer vorgegebenen Teilnehmergruppe aktiviert wird.

Diese Ausführungsform hat den Vorteil, dass unterschiedliche Reaktionen auf die Anforderungen verschiedener A-Teilnehmer für den Aufbau von Kommunikationsverbindungen zu dem B-Teilnehmer festgelegt werden können. Ferner kann die Reaktion auf die Anforderung eines A-Teilnehmers für den Aufbau einer Kommunikationsverbindung zu dem B-Teilnehmer in Abhängigkeit von einer Zugehörigkeit des A-Teilnehmers zu einer vorgegebenen Teilnehmergruppe erfolgen. Durch eine derartige Verwendung von Teilnehmergruppen kann die Verwaltung der Reaktionsmodi vereinfacht werden.

Eine Weiterbildung des erfindungsgemäßen Verfahrens und der erfindungsgemäßen Einrichtung sieht vor, dass ein Reaktionsmodus und/oder ein Verfügbarkeitsprofil in Abhängigkeit von einem aktuellen Wochentag und/oder einer aktuellen Tageszeit aktiviert wird.

Vorteilhaft ermöglicht es diese Weiterbildung des erfindungsgemäßen Verfahrens und der erfindungsgemäßen Einrichtung, anhand von Wochentagen und Tageszeiten Zeitintervalle vorzugeben, in denen ein Reaktionsmodus und/oder ein Verfügbarkeitsprofil aktiviert wird. Beispielsweise kann hierbei ein Zeitintervall definiert werden, das der Arbeitszeit des B-Teilnehmers entspricht, während derer sich der A-Teilnehmer in seinem Büro befindet. Für dieses Zeitintervall können automatisch vorgegebene Reaktionsmodi aktiviert werden, die den während der Arbeitszeit des B-Teilnehmers bestehenden Gegebenheiten Rechnung tragen.

Eine Ausgestaltung des erfindungsgemäßen Verfahrens und der erfindungsgemäßen Einrichtung zeichnet sich zudem dadurch aus, dass ein Reaktionsmodus und/oder ein Verfügbarkeitsprofil in Abhängigkeit von einer räumlichen Position eines mobilen Kommunikationsendgeräts des B-Teilnehmers aktiviert wird.

Hierdurch ist es beispielsweise möglich, automatisch unterschiedliche Reaktionsmodi und/oder Verfügbarkeitsprofile bei einem Aufenthalt des B-Teilnehmers an seiner Arbeitsstätte oder bei einem Aufenthalt an seiner Wohnstätte zu aktivieren.

Darüber hinaus ist es in einer Ausführungsform des erfindungsgemäßen Verfahrens und der erfindungsgemäßen Einrichtung vorgesehen, dass ein Reaktionsmodus und/oder ein Verfügbarkeitsprofil aufgrund einer an einem Kommunikationsendgerät des B-Teilnehmers vorgenommenen Bedienaktion aktiviert wird.

In dieser Ausführungsform kann der B-Teilnehmer einen bestimmten Reaktionsmodus und/oder ein bestimmtes Verfügbarkeitsprofil vorteilhaft manuell aktivieren, indem er eine Bedienaktion zur Aktivierung des Reaktionsmodus an seinem Kommunikationsendgerät ausführt.

Ferner sieht eine Weiterbildung des erfindungsgemäßen Verfahrens und der erfindungsgemäßen Einrichtung vor, dass ein Reaktionsmodus in Abhängigkeit eines Inhalts von Daten aktiviert wird, deren Übertragung an den B-Teilnehmer im Rahmen des Kommunikationsdienstes, auf den sich die Anforderung bezieht, erfolgen soll.

Hierdurch können Reaktionsmodi vorteilhaft in Abhängigkeit von dem Inhalt einer an den B-Teilnehmer adressierten Sprach- und/oder Datennachricht aktiviert werden. Dies ermöglicht es insbesondere, dass anhand der Reaktionsmodi festgelegt werden kann, dass nur Nachrichten mit einem wichtigen Inhalt an den B-Teilnehmer weitergeleitet werden. Im Rahmen dieser Weiterbildung können beispielsweise Schlüsselworte vorgegeben werden, wobei ein bestimmter Reaktionsmodus aktiviert wird, wenn eine Datennachricht, deren Übermittlung an den B-Teilnehmer angefordert wird, das vorgegebene Schlüsselwort enthält.

Gleichfalls kann es auch vorgesehen sein, dass einem Geräteprofil des Kommunikationsendgeräts des B-Teilnehmers ein Reaktionsmodus zugeordnet ist, und dass der Reaktionsmodus aktiviert wird, wenn das Gerätprofil aktiviert wird.

Die Geräteprofile des Kommunikationsendgeräts legen insbesondere die Einstellungen des Kommunikationsendgerätes bezüglich der Lautstärke und der Art der Signaltöne fest, die bei eingehenden Sprach- und/oder Datennachrichten wiedergegeben werden.

Eine weitere Ausgestaltung des erfindungsgemäßen Verfahrens und der erfindungsgemäßen Vorrichtung ist dadurch gekennzeichnet, dass einem Verfügbarkeitsprofil ein Geräteprofil eines Kommunikationsendgeräts des B-Teilnehmers zugeordnet ist, wobei das Verfügbarkeitsprofil und das Geräteprofil synchron aktiviert werden.

Vorteilhaft können die in einem Gerätprofil des Kommunikationsendgeräts des B-Teilnehemers vorgegebenen Einstellungen in der zuvor genannten Ausgestaltung der Erfindung synchron mit einem Verfügbarkeitsprofil aktiviert werden.

Eine Weiterbildung des erfindungsgemäßen Verfahrens und der erfindungsgemäßen Einrichtung beinhaltet ferner, dass mehrere Reaktionsmodi und/oder Verfügbarkeitsprofile im Bereich eines mit dem Kommunikationsnetzwerk verbundenen Servers gespeichert sind.

Diese Weiterbildung des erfindungsgemäßen Verfahrens und der erfindungsgemäßen Einrichtung weist insbesondere den Vorteil auf, dass die Reaktionsmodi unabhängig von dem Betriebszustand des Kommunikationsendgeräts des B-Teilnehmers genutzt werden können.

Bei einer Ausgestaltung des erfindungsgemäßen Verfahrens und der erfindungsgemäßen Vorrichtung ist es vorgesehen, dass einem Reaktionsmodus, der als Reaktion auf eine Anforderung zum Aufbau einer Kommunikationsverbindung zu dem B-Teilnehmer den Aufbau der Kommunikationsverbindung zu dem B-Teilnehmer vorsieht, eine Angabe darüber zugeordnet werden kann, ob der Aufbau der Kommunikationsverbindung gewünscht ist.

Auf diese Weise kann vorteilhaft festgelegt werden, dass ein Aufbau einer Kommunikationsverbindung zu dem B-Teilnehmer zwar möglich, jedoch nicht gewünscht ist.

Darüber hinaus sieht eine Ausführungsform des erfindungsgemäßen Verfahrens und der erfindungsgemäßen Einrichtung vor, dass anhand wenigstens eines sich auf einem Kommunikationsdienst beziehenden aktiven Reaktionsmodus eine Verfügbarkeitsinformation in Bezug auf diesen Kommunikationsdienst ermittelt wird, wobei die Verfügbarkeitsinformation angibt, ob im Rahmen des Kommunikationsdienstes eine Kommunikationsverbindung zu dem B-Teilnehmer aufgebaut werden kann und/oder ob der Aufbau einer Kommunikationsverbindung zu dem B-Teilnehmer gewünscht ist, dass die Verfügbarkeitsinformation an ein Kommunikationsendgerät des A-Teilnehmers gesendet wird und dass die Verfügbarkeitsinformation an dem Kommunikationsendgerät des A-Teilnehmers angezeigt werden kann.

Eine Verfügbarkeitsinformation in Bezug auf einen Kommunikationsdienst gibt vorteilhaft an, ob eine Kommunikationsverbindung zu dem B-Teilnehmer im Rahmen dieses Kommunikationsdienstes aufgebaut werden kann bzw. der Aufbau einer Kommunikationsverbindung gewünscht ist. Vorteilhaft wird eine derartige Verfügbarkeitsinformation bei der zuvor genannten Ausführungsform des erfindungsgemäßen Verfahrens und der erfindungsgemäßen Einrichtung an den A-Teilnehmer gesendet, so dass dieser Kenntnis über die Erreichbarkeit des B-Teilnehmers über eine Kommunikationsverbindung im Rahmen eines Kommunikationsdienstes erhält. Anhand dieser Kenntnis kann der A-Teilnehmer ermitteln, ob der B-Teilnehmer im Rahmen des vorgesehenen Kommunikationsdienstes erreichbar ist, bevor er versucht, eine Kommunikationsverbindung zu dem B-Teilnehmer aufzubauen. Hierdurch kann der A-Teilnehmer im Falle der Nichterreichbarkeit des B-Teilnehmers vermeiden, Zeit in vergebliche Versuche zu investieren, eine Kommunikationsverbindung zu dem B-Teilnehmer aufzubauen.

Werden Verfügbarkeitsinformationen in Bezug auf mehrere innerhalb des Kommunikationsnetzwerks zur Verfügung stehende Kommunikationsdienste bereitgestellt, können anhand der Verfügbarkeitsinformationen die Kommunikationsdienste ermittelt werden, in deren Rahmen aktuell eine Kommunikationsverbindung zu dem B-Teilnehmer aufgebaut werden kann.

Bei einer Ausgestaltung des erfindungsgemäßen Verfahrens und der erfindungsgemäßen Einrichtung ist es vorgesehen, dass anhand der in einem aktiven Verfügbarkeitsprofil enthaltenen Reaktionsmodi ein Verfügbarkeitszustand des B-Teilnehmers ermittelt wird, wobei der Verfügbarkeitszustand angibt, ob der Aufbau einer Kommunikationsverbindung zu dem B-Teilnehmer im Rahmen aller von dem Kommunikationsnetzwerk zur Verfügung gestellten Kommunikationsdienste, im Rahmen eines Teils der von dem Kommunikationsnetzwerk zur Verfügung gestellten Kommunikationsdienste oder im Rahmen keines der von dem Kommunikationsnetzwerk zur Verfügung gestellten Kommunikationsdienste möglich ist und/oder gewünscht wird, dass der Verfügbarkeitszustand des B-Teilnehmers an ein Kommunikationsendgerät des A-Teilnehmers gesendet wird und dass der Verfügbarkeitszustand des B-Teilnehmers an dem Kommunikationsendgerät des A-Teilnehmers angezeigt werden kann.

Vorteilhaft wird in dieser Ausführungsform ein Verfügbarkeitszustand des B-Teilnehmers an den A-Teilnehmer übermittelt, der angibt, ob eine Kommunikationsverbindung zu dem B-Teilnehmer im Rahmen aller von dem Kommunikationsnetzwerk zur Verfügung gestellten Kommunikationsdienste, im Rahmen eines Teils der von dem Kommunikationsnetzwerk zur Verfügung gestellten Kommunikationsdienste oder im Rahmen keines der von dem Kommunikationsnetzwerk zur Verfügung gestellten Kommunikationsdienste aufgebaut werden kann bzw. ob der Aufbau einer Kommunikationsverbindung gewünscht ist. Der Verfügbarkeitszustand entspricht damit einer Kurzfassung der aktuellen Verfügbarkeitsinformationen in Bezug auf alle von dem Kommunikationsnetzwerk zur Verfügung gestellten Kommunikationsdienste, Anhand des Verfügbarkeitszustands erhält der A-Teilnehmer eine kompakte Übersicht über die aktuelle Erreichbarkeit des B-Teilnehmers.

Eine Ausgestaltung des erfindungsgemäßen Verfahrens und der erfindungsgemäßen Einrichtung beinhaltet zudem, dass die Verfügbarkeitsinformation und/oder der Verfügbarkeitszustand des B-Teilnehmers an das Kommunikationsendgerät des A-Teilnehmers gesendet wird, wenn der B-Teilnehmer in einer Kontaktliste des A-Teilnehmers aufgeführt ist.

Vorteilhaft erhält der A-Teilnehmer somit die Verfügbarkeitsinformationen und/oder die Verfügbarkeitszustände der Personen bzw. B-Teilnehmer, die er in seine Kontaktliste eingetragen hat.

Darüber hinaus wird ein Computerprogrammprodukt bereitgestellt, das sich dadurch auszeichnet, dass es ein Computerprogramm zum Ausführen eines Verfahrens der zuvor beschriebenen Art umfasst.

Eine Ausgestaltung der erfindungsgemäßen Einrichtung beinhaltet, dass die Einrichtung dazu ausgebildet ist, anhand wenigstens eines sich auf einem Kommunikationsdienst beziehenden Reaktionsmodus eine Verfügbarkeitsinformation in Bezug auf diesen Kommunikationsdienst zu ermitteln, wobei die Verfügbarkeitsinformation angibt, ob im Rahmen des Kommunikationsdienstes eine Kommunikationsverbindung zu dem B-Teilnehmer aufgebaut werden kann, und dass die Einrichtung dazu ausgebildet ist, die Verfügbarkeitsinformation an ein Kommunikationsendgerät des A-Teilnehmers zu senden.

Ferner wird ein Kommunikationsendgerät bereitgestellt, das eine Schnittstelle für einen Empfang einer Verfügbarkeitsinformation umfasst, die von einer Einrichtung der zuvor beschriebenen Art gesendet wird, und dass es eine Anzeigeeinrichtung zur Darstellung der Verfügbarkeitsinformation umfasst.

Die zuvor genannten sowie weitere Vorteile, Besonderheiten und zweckmäßige Weiterbildungen der Erfindung werden auch anhand der Ausführungsbeispiele deutlich, die nachfolgend unter Bezugnahme auf die Figur beschrieben werden.

### Kurze Beschreibung der Figur

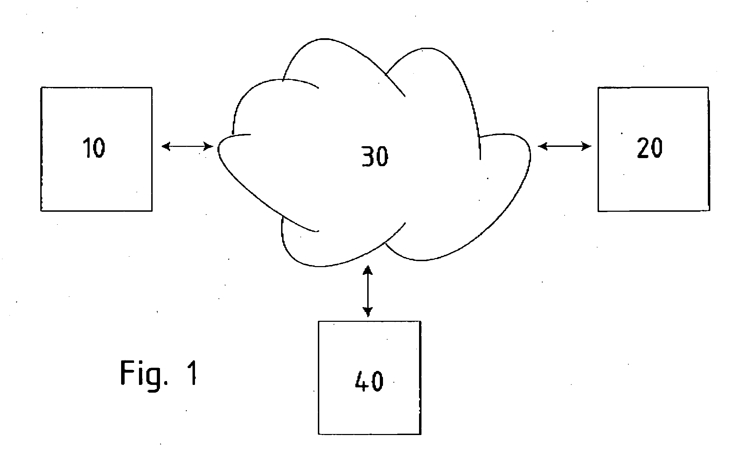

Fig. 1 zeigt eine schematische Darstellung von über ein Kommunikationsnetzwerk verbundenen Kommunikationsendgeräten eines A-Teilnehmers und eines B-Teilnehmers.

### Darstellung von Ausführungsbeispielen

Figur 1 zeigt in schematischer Darstellung ein Kommunikationsendgerät 10 eines A-Teilnehmers und ein Kommunikationsendgerät 20 eines B-Teilnehmers, die mit einem Kommunikationsnetzwerk 30 verbunden sind. Als A-Teilnehmer wird der Teilnehmer bezeichnet, der eine Kommunikationsverbindung zu einem weiteren Teilnehmer aufbaut bzw. den Aufbau einer derartigen Kommunikationsverbindung zu dem weiteren Teilnehmer anfordert. Der weitere Teilnehmer, an den im Rahmen der Kommunikationsverbindung Informationen übertragen werden sollen, wird als B-Teilnehmer bezeichnet. Es versteht sich, dass in der Regel jeder Teilnehmer, der über ein mit dem Kommunikationsnetzwerk 30 verbindbares Kommunikationsendgerät 10, 20 verfügt, sowohl die Rolle des A-Teilnehmers als auch die Rolle des B-Teilnehmers ausfüllen kann. Ferner sind in der Regel Kommunikationsendgeräte 10, 20 einer Vielzahl von Teilnehmern mit dem Kommunikationsnetzwerk 30 verbunden, von denen in Figur 1 exemplarisch nur zwei dargestellt sind.

Bei dem Kommunikationsnetzwerk 30 handelt es sich um ein Netzwerk, das mehrere Kommunikationsdienste zur Sprach- und/oder Datenübertragung von dem A-Teilnehmer zu dem B-Teilnehmer zur Verfügung stellt. Beispielsweise kann es sich bei dem Kommunikationsnetzwerk 30 um ein Mobilfunknetz, um ein drahtgebundenes Fernsprechnetz oder um ein Datennetz, wie etwa das Internet oder ein Intranet, handeln. Bei dem Mobilfunknetz kann es sich zum Beispiel um ein GSM- oder UMTS-Netz (GSM: Global System for Mobile Communications; UMTS: Universal Mobile Telecommunications System) handeln. Mehrere der zuvor beispielhaft genannten Netzwerke können auch mithilfe von Schnittstellensystemen zusammengeschaltet werden, um das Kommunikationsnetzwerk 30 zu bilden.

Bei den von dem Kommunikationsnetzwerk 30 zur Verfügung gestellten Kommunikationsdiensten handelt es sich beispielsweise um mehrere der folgenden Dienste: Dienste für Sprach- oder Videoanrufe, so genannte Mailboxdienste, bei denen eine Sprach- oder Videonachricht des A-Teilnehmers durch eine netzwerkseitig eingerichtete Aufnahmeeinrichtung aufgezeichnet und für den späteren Abruf durch den B-Teilnehmer bereitgehalten wird, SMS (SMS: Short Message Service), MMS (MMS: Multimedia Message Service), einen Dienst zur Übertragung von E-Mails, einen Dienst für Datentransfers, bei dem Dateien direkt an das Kommunikationsendgerät 20 des B-Teilnehmers übertragen werden und einen so genannten IM-Dienst (IM: Instant Messaging), bei dem Nachrichten im Rahmen eines Chats in Echtzeit zwischen dem A- und dem B-Teilnehmer ausgetauscht werden. Weiterhin kann von dem Kommunikationsnetzwerk 30 ein Kommunikationsdienst zur Übermittlung von interaktiven Einladungen für Termine zur Verfügung gestellt werden. Diese Einladungen kann der B-Teilnehmer annehmen oder ablehnen, wobei der Termin bei einer Annahme in einen elektronischen Kalender des B-Teilnehmers und in einen elektronischen Kalender des A-Teilnehmers eingetragen wird.

Das Kommunikationsendgerät 20 des B-Teilnehmers umfasst eine Schnittstelle für die Verbindung mit dem Kommunikationsnetzwerk 30, welche insbesondere den Empfang von Sprach- oder Datennachrichten ermöglicht, die im Rahmen der von dem Kommunikationsnetzwerk 30 zur Verfügung gestellten Dienste an den B-Teilnehmer übertragen werden. Ferner verfügt das Kommunikationsendgerät 20 über eine Wiedergabeeinrichtung zur Wiedergabe von Sprach- und/oder Videonachrichten, über eine Anzeigeeinrichtung zur Darstellung von Datennachrichten sowie über eine oder mehrere Erfassungseinrichtungen zur Erfassung von Sprachdaten und/oder Videobildern im Rahmen eines Sprach- oder Videoanrufs. Weiterhin weist das Kommunikationsendgerät 20 des B-Teilnehmers vorzugsweise zudem einen Prozessor zur Ausführung von Softwareprogrammen auf, einen Speicher zum Speichern der Softwareprogramme sowie eine Eingabeeinrichtung, die insbesondere die Bedingung der Softwareprogramme ermöglicht.

Das Kommunikationsendgerät 10 des A-Teilnehmers verfügt ebenfalls über eine Schnittstelle zur Herstellung einer Verbindung mit dem Kommunikationsnetzwerk 30, welche grundsätzlich den Aufbau von Kommunikationsverbindungen zu dem B-Teilnehmer im Rahmen der von dem Kommunikationsnetzwerk 30 zur Verfügung gestellten Kommunikationsdienste ermöglicht. Ferner verfügt das Kommunikationsendgerät 10 des A-Teilnehmers über eine Eingabeeinrichtung zur Eingabe von Daten, die innerhalb einer Kommunikationsverbindung im Rahmen eines Kommunikationsdienstes, wie etwa einem SMS-, MMS-, oder E-Mail-Dienst, an das Kommunikationsendgerät 20 des B-Teilnehmers gesendet werden, und vorzugsweise über eine oder mehrere Erfassungseinrichtungen zur Erfassung von Sprach- und/oder Videodaten, die im Rahmen entsprechender Kommunikationsdienste an den B-Teilnehmer übermittelt werden können. Darüber hinaus ermöglicht die Schnittstelle des Kommunikationsendgeräts 10 zu dem Kommunikationsnetzwerk 30 vorzugsweise auch den Empfang von Sprach- und/oder Datennachrichten über das Kommunikationsnetzwerk 30. Das Kommunikationsendgerät 10 verfügt zudem über eine Wiedergabe- und/oder eine Anzeigeeinrichtung zur Wiedergabe der Sprachnachrichten bzw. zur Anzeige der Datennachrichten. Zusätzlich verfügt das Kommunikationsendgerät 10 des A-Teilnehmers vorzugsweise über einen Prozessor zur Ausführung von Softwareprogrammen und einen Speicher zum Speichern der Softwareprogramme und weiterer Daten.

Beispielsweise kann es sich bei den Kommunikationsendgeräten 10, 20 des A- und des B-Teilnehmers um mobile Endgeräte wie etwa Mobiltelefone oder PDAs (PDA: Personal Data Assistent), Telefone oder PCs (PC: Personal Computer) handeln. Es ist dabei jedoch darauf hinzuweisen, dass der A- und der B-Teilnehmer Kommunikationsgeräte unterschiedlicher Art nutzen können.

Um eine Kommunikationsverbindung zu dem B-Teilnehmer aufzubauen, fordert der A-Teilnehmer mittels seines Kommunikationsendgeräts 10 den Aufbau der Kommunikationsverbindung im Rahmen eines Kommunikationsdienstes an. Die Anforderung umfasst die Angabe von Kontaktdaten des B-Teilnehmers bzw. seines Kommunikationsendgeräts 20, die ein netzwerkseitiges Routing der Anforderung zu dem Kommunikationsendgerät 20 des B-Teilnehmers gestattet, Im Falle von Sprachanrufen, SMS- oder MMS-Nachrichten umfassen die Kontaktdaten beispielsweise eine Rufnummer, die dem B-Teilnehmer innerhalb des Kommunikationsnetzwerks 30 zugeordnet ist. Die Anforderung zur Übermittlung einer E-Mail erfolgt beispielsweise unter Angabe der E-Mail-Adresse des B-Teilnehmers. Vorzugsweise enthält die Anforderung ebenfalls Kontaktdaten des A-Teilnehmers bzw, seines Kommunikationsendgeräts 10, bei denen es sich beispielsweise um die dienstespezifischen Kontaktdaten der gleichen Art handeln kann, wie die in der Anforderung enthaltenen Kontaktdaten des B-Teilnehmers.

Auf eine Anforderung des A-Teilnehmers für den Aufbau einer Kommunikationsverbindung zu dem B-Teilnehmer im Rahmen eines Kommunikationsdienstes kann in unterschiedlicher Weise reagiert werden. Die Reaktionen auf die Anforderungen für den Aufbau einer Kommunikationsverbindung zu dem B-Teilnehmer werden im Rahmen der Erfindung anhand von Reaktionsmodi festgelegt. Die Reaktionsmodi werden von dem B-Teilnehmer für die innerhalb des Kommunikationsnetzwerks 30 zur Verfügung stehenden Kommunikationsdienste individuell festgelegt, so dass in Bezug auf unterschiedliche Kommunikationsdienste verschiedene Reaktionen auf eine Anforderung für den Aufbau einer Kommunikationsverbindung zu dem B-Teilnehmer erfolgen können.

Die Reaktion auf eine Anforderung für den Aufbau einer Kommunikationsverbindung zu dem B-Teilnehmer erfolgt in einer Ausführungsform der Erfindung netzwerkseitig und wird durch eine Steuerungseinrichtung gesteuert, die Bestandteil eines mit dem Kommunikatiönsnetzwerk verbundenen Servers 40 ist. In einer weiteren Ausführungsform der Erfindung kann die Reaktion auch endgeräteseitig erfolgen. In diesem Fall ist die Steuerungseinrichtung Bestandteil des Kommunikationsendgeräts 20 des B-Teilnehmers.

Ob die Reaktion auf eine Anforderung für den Aufbau einer Kommunikationsverbindung netzwerkseitig oder endgeräteseitig erfolgt, hängt von der Art des Kommunikationsnetzwerks 30 und der Fähigkeit des verwendeten Kommunikationsendgerätes 20 des B-Teilnehmers ab. Handelt es sich bei dem Kommunikationsnetzwerk beispielsweise um ein GSM- oder UMTS-Mobilfunknetzwerk, erfolgt die Reaktion auf die Anforderung vorzugsweise netzwerkseitig.

Mögliche festlegbare Reaktionsmodi für eine Reaktion auf die Anforderung des A-Teilnehmers für den Aufbau einer Kommunikationsverbindung zu dem B-Teilnehmer im Rahmen eines Kommunikationsdienstes werden im Folgenden dargestellt:

Die Kommunikationsverbindung zu dem B-Teilnehmer kann im Rahmen des Kommunikationsdienstes, auf den sich die Anforderung bezieht, aufgebaut werden, so dass der B-Teilnehmer die im Rahmen der Kommunikationsverbindung gesendeten Daten empfängt bzw. einen Sprach- oder Videoanruf annehmen kann. Dieser Reaktionsmodus entspricht der an sich bekannten Reaktion auf eine Anforderung für den Aufbau einer Kommunikationsverbindung zu dem B-Teilnehmer, bei der die Anforderung innerhalb des Kommunikationsnetzwerks 30 an das Kommunikationsendgerät 20 des B-Teilnehmers weitergeleitet wird.

Gleichfalls kann es auch vorgesehen sein, dass die Anforderung zu einem weiteren von dem Kommunikationsnetzwerk 30 bereitgestellten Kommunikationsdienst umgeleitet wird, in dessen Rahmen eine Kommunikationsverbindung zwischen dem A-Teilnehmer und dem B-Teilnehmer aufgebaut wird. Beispiele hierfür sind die Umleitung eines Sprachanrufs an einen Mailbox-Dienst und die Umleitung einer SMS-Nachricht an einen E-Mail-Dienst.

Darüber hinaus kann die Anforderung des A-Teilnehmers für den Aufbau einer Kommunikationsverbindung zu dem B-Teilnehmer automatisch abgewiesen werden, so dass aufgrund der Anforderung keine Kommunikationsverbindung zu dem B-Teilnehmer aufgebaut wird. In dem Fachmann an sich bekannter Weise kann es auch vorgesehen sein, dass netzwerkseitig eine Nachricht über das Abweisen der Anforderung an den A-Teilnehmer übermittelt wird. Dies kann im Falle von Sprachanrufen beispielsweise eine Ansage sein, in der dem A-Teilnehmer mitgeteilt wird, dass der B-Teilnehmer nicht verfügbar ist.

Ferner kann aufgrund der Anforderung des A-Teilnehmers für den Aufbau einer Kommunikationsverbindung zu dem B-Teilnehmer eine Benachrichtigung über die Anforderung an den B-Teilnehmer gesendet bzw. angezeigt werden und/oder eine Benachrichtigung über die Behandlung der Anforderung an den A-Teilnehmer gesendet werden. Die Benachrichtigung des A-Teilnehmers erfolgt vorzugsweise unmittelbar nach dem Empfang der Anforderung für den Aufbau einer Kommunikationsverbindung zu dem B-Teilnehmer und wird im Rahmen eines vorgebbaren Kommunikationsdienstes an den A-Teilnehmer übermittelt. Im Falle des Abweisens der Anforderung wird erfolgt die Benachrichtigung zusätzlich zu der zuvor beschriebenen Nachricht, die gegebenenfalls netzwerkseitig an den A-Teilnehmer übermittelt wird. Die Benachrichtigung des B-Teilnehmers kann ebenfalls unmittelbar nach dem Empfang der Anforderung oder nach dem Ablauf einer vorgebbaren Zeitspanne gesendet bzw. angezeigt werden. Insbesondere im Hinblick auf Sprachanrufe ist es an sich bekannt, dass netzwerkseitig Nachrichten über nicht angenommene "Anrufe in Abwesenheit" an den B-Teilnehmer gesendet werden. Die innerhalb eines Reaktionsmodus vorgesehene Benachrichtigung des B-Teilnehmers kann im Rahmen der Erfindung zusätzlich zu dieser Nachricht an den B-Teilnehmer gesendet bzw, an seinem Kommunikationsendgerät 20 angezeigt werden.

Vorzugsweise können auch mehrere der zuvor dargestellten Möglichkeiten zur Bearbeitung der Anforderung des A-Teilnehmers für den Aufbau einer Kommunikationsverbindung zu dem B-Teilnehmer innerhalb eines Reaktionsmodus miteinander kombiniert werden. So kann es beispielsweise vorgesehen sein, dass die Anforderung abgewiesen wird und zusätzlich eine Benachrichtigung an den A-Teilnehmer und/oder den B-Teilnehmer gesendet wird. Beispielsweise kann zusätzlich zu der Abweisung einer Anforderung des A-Teilnehmers für den Aufbau eines Sprachanrufs eine SMS-Nachricht an den A-Teilnehmer gesendet werden, in dem diesem mitgeteilt wird, dass der B-Teilnehmer aktuell nicht für die Annahme von Sprachanrufen verfügbar ist. Zudem kann an den B-Teilnehmer eine Benachrichtigung gesendet werden, in der ihm mitgeteilt wird, dass die Anforderung des A-Teilnehmers für den Aufbau eines Sprachanrufs in einem bestimmten Zeitpunkt eingegangen ist.

Für jeden von dem Kommunikationsnetzwerk 30 zur Verfügung gestellten Kommunikationsdienst können im Rahmen der vorliegenden Erfindung zudem mehrere Reaktionsmodi vorgegeben werden, von denen jeweils einer in Bezug auf eine eingehende Anforderung für den Aufbau einer Kommunikationsverbindung zu dem B-Teilnehmer aktiv ist. Die Aktivierung erfolgt aufgrund eines oder mehrerer durch den B-Teilnehmer vorgegebener Kriterien und wird durch die Steuerungseinrichtung oder - falls diese nicht Bestandteil des Kommunikationsendgeräts 20 des B-Teilnehmers ist - mittels des Kommunikationsendgeräts 20 vorgenommen.

Mögliche Kriterien zur Aktivierung der Reaktionsmodi werden im Folgenden dargestellt:

Ein mögliches Kriterium für die Aktivierung eines Reaktionsmodus für einen bestimmten Kommunikationsdienst ist der aktuelle Wochentag oder die aktuelle Tageszeit, Anhand eines derartigen Kriteriums kann der B-Teilnehmer beispielsweise festlegen, dass während seiner Arbeitszeit in anderer Weise auf eine eingehende Anforderung für den Aufbau einer Kommunikationsverbindung reagiert wird als während seiner Freizeit, Im Bezug auf dieses Kriterium wird festgelegt, dass ein bestimmter Reaktionsmodus für einen bestimmten Kommunikationsdienst an einem oder mehreren vorgegebenen Wochentagen und/oder innerhalb eines vorgegebenen Zeitintervalls an einem oder mehreren Wochentagen aktiv ist. Die für die Aktivierung der Reaktionsmodi vorgegebenen Wochentage und/oder Tageszeiten werden in dem Server 40 oder in dem Kommunikationsendgerät 20 des B-Teilnehmers gespeichert, je nachdem, durch welche dieser Einrichtungen die Aktivierung vorgenommen werden soll. Die für die Aktivierung vorgesehene Einrichtung ermittelt regelmäßig den aktuellen Wochentag und/oder die aktuelle Tageszeit und aktiviert die für diesen Wochentag und/oder diese Tageszeit vorgegebenen Reaktionsmodi für die von dem Kommunikationsnetzwerk 30 zur Verfügung gestellten Kommunikationsdienste.

Ein weiteres mögliches Kriterium für die Aktivierung eines Reaktionsmodus ist der aktuelle Standort des B-Teilnehmers, der beispielsweise anhand der aktuellen räumlichen Position eines mobilen Kommunikationsendgeräts des B-Teilnehmers ermittelt werden kann. Anhand dieses Kriteriums kann der B-Teilnehmer beispielsweise festlegen, dass während eines Aufenthalts an seiner Arbeitsstätte in anderer Weise auf eine eingehende Anforderung für den Aufbau einer Kommunikationsverbindung reagiert wird als während eines Aufenthalts an seiner Wohnstätte. Die räumliche Position eines mobilen Kommunikationsendgeräts kann beispielsweise in einer dem Fachmann an sich bekannten Weise anhand der Funkzelle eines Mobilfunknetzes bestimmt werden, in der sich das mobile Kommunikationsendgerät aktuell befindet. Die Information über diese Funkzelle steht netzwerkseitig zur Verfügung und kann ebenfalls an das mobile Kommunikationsendgerät oder ein weiteres Kommunikationsendgerät 20 des B-Teilnehmers übermittelt werden. Insofern kann eine Aktivierung von Reaktionsmodi anhand dieses Kriteriums sowohl durch den Server 40 als auch durch das Kommunikationsendgerät 20 des B-Teilnehmers vorgenommen werden. Zudem muss es sich bei dem Kommunikationsendgerät 20 des B-Teilnehmers nicht um das mobile Kommunikationsendgerät handeln, dessen Standort festgestellt wird. Die für die Aktivierung der Reaktionsmodi maßgeblichen Standorte des B-Teilnehmers bzw. seines mobilen Kommunikationsendgeräts werden in dem Server 40 oder in dem Kommunikationsendgerät 20 des B-Teilnehmers gespeichert, je nachdem, durch welche dieser Einrichtungen die Aktivierung vorgenommen werden soll. Die für die Aktivierung vorgesehene Einrichtung ermittelt regelmäßig den aktuellen Standort des B-Teilnehmers bzw. sein mobiles Endgerät und aktiviert die in Bezug auf diesen Standort vorgegebenen Reaktionsmodi für die verschiedenen von dem Kommunikationsnetzwerk 30 zur Verfügung gestellten Kommunikationsdienste.

Darüber hinaus ist ein weiteres mögliches Kriterium für die Aktivierung von Reaktionsmodi eine Bedienaktion, die der B-Teilnehmer an seinem Kommunikationsendgerät 20, vornimmt. Unter Verwendung dieses Kriteriums kann der B-Teilnehmer Reaktionsmodi manuell durch Ausführung der Bedienaktion aktivieren. Eine derartige Bedienaktion kann beispielsweise in einer mittels der Eingabeeinrichtung des Kommunikationsendgeräts 20 vorgenommen Auswahl eines oder mehrerer Reaktionsmodi an einer grafischen Benutzeroberfläche bestehen, welche an der Anzeigeeinrichtung des Kommunikationsendgeräts 20 dargestellt wird, Falls die Aktivierung von Reaktionsmodi anhand eines derartigen Kriteriums durch das Kommunikationsendgerät 20 des B-Teilnehmers vorgenommen wird, erfolgt die Aktivierung der betreffenden Reaktionsmodi unmittelbar aufgrund der Bedienaktion. Wird die Aktivierung von in Bezug auf dieses Kriterium durch eine in dem Server 40 angeordnete Steuerungseinrichtung vorgenommen, so wird aufgrund der Bedienaktion ein Aktivierungssignal in Bezug auf die zu aktivierenden Reaktionsmodi von dem Kommunikationsendgerät 20 des B-Teilnehmers an den Server 40 gesendet, welches die Aktivierung der Reaktionsmodi bewirkt.

Bei den bislang beschriebenen Kriterien für die Aktivierung von Reaktionsmodi handelt es sich um Kriterien mit einem zeitlichen und/oder örtlichen Bezug. Neben diesen Kriterien können jedoch auch Kriterien ohne zeitlichen und/oder örtlichen Bezug für die Aktivierung von Reaktionsmodi herangezogen werden.

Ein derartiges Kriterium ist die Identität des A-Teilnehmers und/oder die Zugehörigkeit des A-Teilnehmers zu einer vorgegebenen Teilnehmergruppe, die ebenfalls für die Aktivierung von Reaktionsmodi herangezogen werden können. im Hinblick auf dieses Kriterium werden den Reaktionsmodi Kontaktdaten von Personen zugeordnet, die, wie zuvor beschrieben, auch in der Anforderung für den Aufbau einer Kommunikationsverbindung zu dem B-Teilnehmer enthalten sind. Die Aktivierung eines bestimmten Reaktionsmodus erfolgt dann, wenn die Anforderung für den Aufbau einer Kommunikationsverbindung die diesem Reaktionsmodus zugeordneten Kontaktdaten umfasst. Ferner können die Kontaktdaten mehrerer Personen zu einer Gruppe zusammengefasst werden, die einem bestimmten Reaktionsmodus zugeordnet werden kann. Die Aktivierung eines bestimmten Reaktionsmodus erfolgt in diesem Fall dann, wenn die Anforderung für den Aufbau einer Kommunikationsverbindung Kontaktdaten umfasst, die innerhalb einer diesem Reaktionsmodus zugeordneten Gruppe enthalten sind. Die Aktivierung von Reaktionsmodi in Abhängigkeit von der Identität des A-Teilnehmers und/oder von der Zugehörigkeit des A-Teilnehmers zu einer vorgegebenen Teilnehmergruppe wird vorzugsweise durch die Steuerungseinrichtung selbst vorgenommen, da die Aktivierung beim Empfang einer Anforderung des A-Teilnehmers für den Aufbau einer Kommunikationsverbindung zu dem B-Teilnehmer erfolgen muss,

Ein weiteres Kriterium zur Aktivierung von Reaktionsmodi, das als Kriterium ohne zeitlichen und/oder räumlichen Bezug angesehen werden kann, ist die Aktivierung eines Reaktionsmodus in Abhängigkeit eines Inhalts einer Sprach- und/oder Datennachricht, deren Übertragung an den B-Teilnehmer im Rahmen des Kommunikationsdienstes angefordert wird. Insbesondere könne beispielsweise eines oder mehrere Schlüsselworte vorgegeben werden, so dass ein Reaktionsmodus aktiviert wird, wenn eine Datennachricht, deren Übermittlung an den B-Teilnehmer angefordert wird, eines der vorgegebenen Schlüsselworte enthält. Dieses Kriterium erlaubt es, dass anhand der Reaktionsmodi insbesondere festgelegt werden kann, dass nur Nachrichten mit einem wichtigen Inhalt an den B-Teilnehmer weitergeleitet werden.

Gleichfalls kann es auch vorgesehen sein, dass einem Geräteprofil des Kommunikationsendgeräts des B-Teilnehmers ein Reaktionsmodus ist, und dass der Reaktionsmodus aktiviert wird, wenn das Gerätprofil aktiviert wird. Die Geräteprofile des Kommunikationsendgeräts legt insbesondere die Einstellungen des Kommunikationsendgerätes bezüglich der Lautstärke und der Art der Signaltöne fest, die bei eingehenden Sprach- und/oder Datennachrichten wiedergegeben werden.

Grundsätzlich kann in Bezug auf jeden von dem Kommunikationsnetzwerk zur Verfügung gestellten Kommunikationsdienst eine beliebige Anzahl an Reaktionsmodi definiert werden. Jedem Reaktionsmodus ist dabei wenigstens ein Kriterium für die Aktivierung des Reaktionsmodus zugeordnet. Selbstverständlich können einem Reaktionsmodus auch mehrere Kriterien für eine Aktivierung zugeordnet werden, die kumulativ erfüllt sein müssen, damit der Reaktionsmodus aktiviert wird. So kann es beispielsweise vorgesehen sein, dass ein bestimmter Reaktionsmodus an einem vorgegebenen Wochentag zu einer vorgegebenen Tageszeit in Bezug auf Anforderungen eines vorgegebenen A-Teilnehmers für den Aufbau einer Kommunikationsverbindung zu dem B-Teilnehmer aktiviert wird.

Um die Verwaltung der Reaktionsmodi zu vereinfachen, ist vorgesehen, dass Reaktionsmodi, die sich auf unterschiedliche von dem Kommunikationsnetzwerk zur Verfügung gestellte Kommunikationsdienste beziehen und aufgrund wenigstens eines übereinstimmenden Kriteriums aktiviert werden, zu einem Verfügbarkeitsprofil des B-Teilnehmers zusammengefasst werden. Vorzugsweise umfasst ein einziges Verfügbarkeitsprofil Reaktionsmodi in Bezug auf alle von dem Kommunikationsnetzwerk 30 bereitgestellten Kommunikationsdienste, die aufgrund eines übereinstimmenden Kriteriums aktiviert werden. Einem Verfügbarkeitsprofil kann ein Aktivierungskriterium zugeordnet sein, welches für die Aktivierung des Verfügbarkeitsprofils herangezogen wird, die einer Aktivierung aller in dem Verfügbarkeitsprofil enthaltenen Reaktionsmodi entspricht. Dies schließt jedoch selbstverständlich nicht aus, dass in einem Verfügbarkeitsprofil einzelne Reaktionsmodi enthalten sein können, für die zusätzliche Aktivierungskriterien vorgegeben werden.

Die Aktivierung von Verfügbarkeitsprofilen aufgrund eines oder mehrerer vorgebbarer Kriterien kann ebenfalls durch die Steuerungseinrichtung vorgenommen werden, die Bestandteil des Servers 40 oder des Kommunikationsendgeräts 20 des B-Teilnehmers sein kann. Falls die Steuerungseinrichtung nicht Bestandteil des Kommunikationsendgeräts 20 des B-Teilnehmers ist, kann es auch vorgesehen sein, dass die Aktivierung der Verfügbarkeitsprofile durch das Kommunikationsendgerät 20 des B-Teilnehmers vorgenommen wird. Einzelne in einem Verfügbarkeitsprofil enthaltene Reaktionsmodi, für die zusätzliche Aktivierungskriterien vorgegeben werden, können in diesem Fall jedoch auch durch die Steuerungseinrichtung aktiviert werden.

Die möglichen Kriterien zur Aktivierung der Verfügbarkeitsprofile entsprechen insbesondere den zuvor beschriebenen Kriterien zur Aktivierung von Reaktionsmodi. Sinnvollerweise wird für die Aktivierung eines Verfügbarkeitsprofils jedoch ein Kriterium mit zeitlichem und/oder räumlichem Bezug verwendet. Unter dieser Voraussetzung gibt das aktive Verfügbarkeitsprofil insbesondere die aktuelle Erreichbarkeit des B-Teilnehmers im Rahmen der von dem Kommunikationsnetzwerk 30 zur Verfügung gestellten Kommunikationsdienste an.

Eine derartige Zusammenstellung von Reaktionsmodi zu einem Verfügbarkeitsprofil entspricht dem Bedürfnis des B-Teilnehmers seine Erreichbarkeit in Bezug auf die von dem Kommunikationsnetzwerk 30 zur Verfügung gestellten Kommunikationsdienste für eine bestimmte Zeit, für einen bestimmten Standort oder - im Hinblick auf eine manuelle Aktivierung eines Verfügbarkeitsprofils - für eine bestimmte Situation festzulegen. Gleichfalls werden durch ein Verfügbarkeitsprofil die Kommunikationsdienste festgelegt, in deren Rahmen der B-Teilnehmer während einer bestimmten Zeit, während des Aufenthalts an einem bestimmten Standort oder in bestimmten Situationen erreichbar ist.

Eine Ausführungsform der Erfindung, die auf der Verwendung von Verfügbarkeitsprofilen basiert, bezieht sich auf die Aktivierung von Geräteprofilen des Kommunikationsendgeräts 20 des B-Teilnehmers. Wie eingangs bereits erläutert, sind derartige Geräteprofile insbesondere von Mobiltelefonen her bekannt. Sie können jedoch grundsätzlich auch bei jedem anderen Kommunikationsendgerät 20 des B-Teilnehmers verwendet werden. Die Geräteprofile legen die Einstellungen des Kommunikationsendgerätes 20 bezüglich der Lautstärke und der Art der Signaltöne fest, die bei eingehenden Sprach- und/oder Datennachrichten wiedergegeben werden. Da eine Aktivierung dieser Geräteprofile anhand der gleichen Kriterien durchgeführt werden kann wie die Aktivierung eines Verfügbarkeitsprofils, kann es sinnvoll sein, ein Geräteprofil synchron mit einem Verfügbarkeitsprofil zu aktivieren. Daher ist es in der genannten Ausführungsform der Erfindung vorgesehen, dass vorgegebenen Verfügbarkeitsprofilen jeweils ein Geräteprofil zugeordnet wird, welches synchron mit dem Verfügbarkeitsprofil aktiviert wird. Somit wird das Geräteprofil aufgrund der gleichen Kriterien aktiviert, wie das zugeordnete Verfügbarkeitsprofil.

Die Festlegung der Reaktionen auf eingehende Kommunikationsdienste durch den B-Teilnehmer erfolgt vorzugsweise durch eine Konfiguration eines oder mehrerer Verfügbarkeitsprofile, die mittels einer Konfigurationssoftware von dem B-Teilnehmer durchgeführt werden kann. Die Konfigurationssoftware kann in dem Kommunikationsendgerät 20 des B-Teilnehmers oder in einem von dem B-Teilnehmer nicht als Kommunikationsendgerät 20 genutzten PCs ausgeführt werden.

Bei der Erstellung eines Verfügbarkeitsprofils werden eine Bezeichnung des Verfügbarkeitsprofils sowie wenigstens ein Kriterium für die Aktivierung des Verfügbarkeitsprofils angegeben. Ferner kann ein Geräte-Profil des Kommunikationsendgeräts 20 des B-Teilnehmers spezifiziert werden, das synchron mit dem Verfügbarkeitsprofil aktiviert werden soll. Die Bezeichnung des Verfügbarkeitsprofils kann beispielsweise entsprechend dem vorgesehenen Einsatzzweck des Verfügbarkeitsprofils gewählt werden. Typische Bezeichnungen lauten etwa "Büro" für ein Verfügbarkeitsprofil, das während der Arbeitszeit des B-Teilnehmers aktiv ist, "Freizeit" für ein Verfügbarkeitsprofil, das während der Freizeit des B-Teilnehmers aktiv ist, oder "Theater" für ein Verfügbarkeitsprofil, das während eines Theaterbesuchs aktiv ist. Derartige Bezeichnungen können auch für die Geräteprofile des Kommunikationsendgeräts des B-Teilnehmers verwendet werden. Bei einer Zuordnung eines Verfügbarkeitsprofils zu einem Geräteprofil wird vorzugsweise keine Bezeichnung des Verfügbarkeitsprofils angegeben, sondern eine Kennzeichnung des Geräteprofils, dem das Verfügbarkeitsprofil zugeordnet ist.

Zudem werden für die von dem Kommunikationsnetzwerk zur Verfügung gestellten Kommunikationsdienste Reaktionsmodi individuell definiert, welche die Reaktionen auf Anforderungen für den Aufbau von Kommunikationsdiensten zu dem B-Teilnehmer im Rahmen der verfügbaren Dienste angeben. Vorzugsweise wird dabei für jeden von dem Kommunikationsnetzwerk zur Verfügung gestellten Dienst wenigstens ein Reaktionsmodus vorgegeben. Wird genau ein Reaktionsmodus für einen Dienst angegeben, so können für diesen Reaktionsmodus keine weiteren Aktivierungskriterien angegeben werden, und dieser Reaktionsmodus wird automatisch zusammen mit dem Verfügbarkeitsprofil in Abhängigkeit von dem Aktivierungskriterium aktiviert, welches dem Verfügbarkeitsprofil zugeordnet ist. Es können jedoch für einen oder mehrere Kommunikationsdienste auch mehrere Reaktionsmodi angegeben werden, denen jeweils eines oder mehrere weitere Aktivierungskriterien zugeordnet werden. Auf diese Weise können innerhalb eines Verfügbarkeitsprofils unterschiedliche Reaktionen auf Anforderung für den Aufbau von Kommunikationsdiensten zu dem B-Teilnehmer vorgegeben werden.

Insbesondere können anhand der Vorgabe von mehreren Reaktionsmodi für einen Kommunikationsdienst verschiedene Reaktionen auf Anforderungen unterschiedlicher Personen für den Aufbau einer Kommunikationsverbindung zu dem B-Teilnehmer im Rahmen dieses Kommunikationsdienstes vorgegeben werden. Hierfür werden einem Reaktionsmodus die Personen zugeordnet, bei deren Anforderungen für den Aufbau von Kommunikationsverbindungen zu dem B-Teilnehmer der Reaktionsmodus aktiviert werden soll. Gleichfalls kann einem Reaktionsmodus eine Teilnehmergruppe zugeordnet werden, wodurch der Reaktionsmodus aktiviert wird, wenn eine Anforderung eines Mitglieds der Teilnehmergruppe für den Aufbau einer Kommunikationsverbindung zu dem B-Teilnehmer empfangen wird.

Die für den Kommunikationsdienst maßgeblichen Kontaktdaten der Personen, die, wie zuvor beschrieben, für die Aktivierung der Reaktionsmodi herangezogen werden, sowie die Zugehörigkeit von Personen zu einer Teilnehmergruppe werden vorzugsweise innerhalb einer Kontaktliste des B-Teilnehmers angegeben. Die Funktionalität zur Erstellung von Kontaktlisten ist bereits in einer Vielzahl von Kommunikationsendgeräten 20 verfügbar und kann im Rahmen der vorliegenden Erfindung genutzt werden. Innerhalb der Kontaktliste wird einer Person ein Eintrag zugeordnet, der den Namen der Person sowie die für einen oder mehrere Kommunikationsdienste maßgeblichen Kontaktdaten der Person umfasst. Ferner kann der Eintrag einer Person die Bezeichnung einer von dem B-Teilnehmer definierten Teilnehmergruppe enthalten, welcher die Person zugeordnet ist. Typische Bezeichnungen für Kontaktgruppen lauten beispielsweise "Familie" für eine Kontaktgruppe, welche Familienmitglieder enthält, "Freunde" für eine Kontaktgruppe, die Freunde enthält, und "Büro" für eine Kontaktgruppe, die Arbeitskollegen oder Geschäftspartner enthält.

Die Kontaktliste kann in einer Ausgestaltung der Erfindung durch die Software zur Konfiguration der Verfügbarkeitsprofile ausgelesen werden. Die Software ermittelt in dieser Ausgestaltung die maßgeblichen Kontaktdaten der den Reaktionsmodi zugeordneten Personen oder die maßgeblichen Kontaktdaten der Mitglieder der Teilnehmergruppe, die den Reaktionsmodi zugeordnet sind, und verknüpft diese mit den Reaktionsmodi. In einer weiteren Ausgestaltung der Erfindung wird die Kontaktliste der Steuerungseinrichtung verfügbar gemacht, welche die Aktivierung von Reaktionsmodi in Abhängigkeit von der Identität des A-Teilnehmers und/oder die Zugehörigkeit des A-Teilnehmers zu einer vorgegebenen Teilnehmergruppe durchführt. In dieser Ausgestaltung werden die maßgeblichen Kontaktdaten der den Reaktionsmodi zugeordneten Personen oder die maßgeblichen Kontaktdaten der Mitglieder der Teilnehmergruppen, die den Reaktionsmodi zugeordnet sind, durch die Steuerungseinrichtung ermittelt.

Die mittels der Konfigurationssoftware erstellten Verfügbarkeitsprofile werden an die Einrichtung übermittelt, welche die Aktivierung der Verfügbarkeitsprofile vornimmt, falls die Konfigurationssoftware nicht bereits in dieser Einrichtung ausgeführt worden ist, und werden in dieser Einrichtung gespeichert. Bei der Einrichtung kann es sich, wie zuvor bereits beschrieben, um das Kommunikationsendgerät 20 des B-Teilnehmers oder um den mit dem Kommunikationsnetzwerk 30 verbundenen Server 40 handeln. Die für die Aktivierung vorgesehene Einrichtung prüft regelmäßig, ob ein Verfügbarkeitsprofil aufgrund eines für dieses Verfügbarkeitsprofil vorgegebenen Aktivierungskriteriums zu aktivieren ist und aktiviert dieses, falls das Aktivierungskriterium erfüllt ist. Ein zuvor aktives Verfügbarkeitsprofil wird gleichzeitig deaktiviert, da die Aktivierungskriterien für verschiedene Verfügbarkeitsprofile so gewählt werden, dass sie nicht gleichzeitig erfüllt sein können. Das aktive Verfügbarkeitsprofil wird an die Steuerungseinrichtung übermittelt, die das aktive Verfügbarkeitsprofil zur Steuerung der Reaktionen auf Anforderung für den Aufbau einer Kommunikationsverbindung zu dem B-Teilnehmer heranzieht. Insbesondere wird hierfür bei Empfang einer Anforderung für den Aufbau einer Kommunikationsverbindung zu dem B-Teilnehmer im Rahmen eines Kommunikationsdienstes, der im Hinblick auf diesen Kommunikationsdienst aktiven Reaktionsmodus ermittelt, nach dessen Maßgabe die Reaktion auf die Anforderung gesteuert wird. Falls in dem Verfügbarkeitsprofil mehrere Reaktionsmodi für einen Kommunikationsdienst enthalten sind, die jeweils anhand eines oder mehrerer Aktivierungskriterien zu aktivieren sind, prüft die Steuerungseinrichtung vorzugsweise, ob die Aktivierungskriterien für diese Reaktionsmodi erfüllt sind, und aktiviert die Reaktionsmodi, wenn die Aktivierungskriterien erfüllt sind.

Entsprechend den zuvor beschriebenen Merkmalen der Verfügbarkeitsprofile kann ein Verfügbarkeitsprofil beispielsweise in der folgenden Form dargestellt werden:

| **Name:** Büro | **Geräteprofil:** Silent |
|---|---|
| **Ereignis** | **Reaktion** |
| Sprachanruf von Gruppe A | Bedingung 1: Weiterleiten |
| | Bedingung 2: Aufzeichnung durch Mailbox |
| Sprachanruf von Gruppe B | Weiterleiten |
| Sprachanruf von Gruppe C | Abweisen, SMS-Nachricht zurücksenden, Benachrichtigung |
| Sprachanruf von Gruppe D | Abweisen, SMS-Nachricht zurücksenden, Benachrichtigung |
| Sprachanruf von Gruppe E | Abweisen, SMS-Nachricht zurücksenden, Benachrichtigung |
| SMS-Nachricht | Anzeigen |
| MMS-Nachricht | Anzeigen |
| E-Mail | Anzeigen |
| IM-Nachricht | Anzeigen |
| Einladung zu Termin | Anzeigen |

Das beispielhaft dargestellte Verfügbarkeitsprofil mit der Bezeichnung "Büro" wird beispielsweise an Werktagen während einer festgelegten Arbeitszeit des B-Teilnehmers durch die für die Aktivierung der Verfügbarkeisprofile vorgesehene Einrichtung aktiviert. Gleichzeitig mit der Aktivierung des Verfügbarkeitsprofils wird in dem Kommunikationsendgerät 20 des B-Teilnehmers das Geräteprofil "Silent" aktiviert, bei dem beispielsweise alle Signaltöne eine Lautstärke von Null haben. In dem Verfügbarkeitsprofil ist ferner festgelegt, dass Sprachanrufe durch ein Mitglied der Kontaktgruppe A (z.B. Kontaktgruppe "Familie") bei Vorliegen der Bedingung 1 an das mobile Kommunikationsendgerät des B-Teilnehmers weitergeleitet werden. Bei Vorliegen der Bedingung 2 wird der Anruf an einen Mailbox-Dienst weitergeleitet, so dass der Anrufer eine Nachricht hinterlassen kann. Die Bedingung 1 kann beispielsweise erfüllt sein, wenn sich der B-Teilnehmer bzw. sein mobiles Kommunikationsendgerät an der Arbeitsstätte des B-Teilnehmers befindet. Die Bedingung 2 kann beispielsweise erfüllt sein, wenn sich der B-Teilnehmer bzw. sein mobiles Kommunikationsendgerät nicht an seiner Arbeitsstätte befindet. Weiterhin ist in dem Verfügbarkeitsprofil festgelegt, dass eingehende Sprachanrufe von Mitgliedern der Kontaktgruppe B (z.B. Kontaktgruppe "Büro") an das Kommunikationsendgerät 20 des B-Teilnehmers weitergeleitet werden. Sprachanrufe von Mitgliedern der weiteren Kontaktgruppen (z.B. Kontaktgruppen "Freunde", Kontaktgruppe "Kontaktliste", die beispielsweise alle Personen umfasst, für die ein Eintrag in der Kontaktliste des B-Teilnehmers enthalten ist, die jedoch keiner von dem B-Teilnehmer definierten Kontaktgruppen zugeordnet sind, und Kontaktgruppe "Andere", die beispielsweise alle Personen umfasst, für die kein Eintrag in der Kontaktliste des B-Teilnehmers enthalten ist) werden abgewiesen, und es wird eine SMS-Nachricht an den Anrufer gesendet, in der diesem mitgeteilt wird, dass der B-Teilnehmer nicht erreichbar ist. Zudem wird der B-Teilnehmer über Anrufversuch von Mitgliedern dieser weiteren Kontaktgruppen anhand einer Benachrichtigung informiert. Eingehende SMS-Nachrichten, MMS-Nachrichten, E-Mails, IM-Nachrichten und Termineinladungen werden unabhängig von der Gruppenzugehörigkeit des Absenders an das Kommunikationsendgerät 20 des B-Teilnehmers weitergeleitet und an dem Kommunikationsendgerät 20 angezeigt.

Wie zuvor bereits beschrieben, gibt das aktive Verfügbarkeitsprofil unter der Voraussetzung, dass ein Kriterium mit zeitlichem und/oder räumlichem Bezug für seine Aktivierung verwendet wird, insbesondere die aktuelle Erreichbarkeit des B-Teilnehmers im Rahmen der von dem Kommunikationsnetzwerk 30 zur Verfügung gestellten Kommunikationsdienste an.

In einer Ausführungsform der Erfindung ist es daher vorgesehen, dass dem A-Teilnehmer durch das Kommunikationsnetzwerk 30, Informationen über die aktuelle Erreichbarkeit des B-Teilnehmers im Rahmen der innerhalb des Kommunikationsnetzwerks 30 zur Verfügung stehenden Dienste bereitgestellt werden. Anhand dieser Informationen kann der A-Teilnehmer vor dem Versuch, eine Kommunikationsverbindung zu dem B-Teilnehmer aufzubauen, ermitteln, ob der B-Teilnehmer im Rahmen des vorgesehenen Kommunikationsdienstes erreichbar ist, und welche weiteren Kommunikationsdienste aktuell zur Verfügung stehen, um eine Kommunikationsverbindung zu dem B-Teilnehmer aufzubauen.

Ferner kann im Hinblick auf die Ermittlung von Verfügbarkeitsinformation auch vorgesehen sein, dass einem Reaktionsmodus, der als Reaktion auf eine Anforderung zum Aufbau einer Kommunikationsverbindung zu dem B-Teilnehmer den Aufbau der Kommunikationsverbindung zu dem B-Teilnehmer vorsieht, eine Angabe darüber zugeordnet werden kann, ob der Aufbau der Kommunikationsverbindung gewünscht ist. Hierdurch kann festgelegt werden, dass der Aufbau einer Kommunikationsverbindung zwar möglich, jedoch nicht gewünscht ist.

Die Verfügbarkeitsinformationen werden in dieser Ausführungsform durch den Server 40 über das Kommunikationsnetzwerk 30 bereitgestellt. Der Server 40 hat hierfür Zugriff auf das aktive Verfügbarkeitsprofil des B-Teilnehmers. Dies ist insbesondere dann gewährleistet, wenn die Steuerungseinrichtung zur Steuerung der Reaktion auf die Anforderungen für den Aufbau von Kommunikationsverbindungen zu dem B-Teilnehmer Bestandteil des Servers 40 ist. Vorzugsweise werden die Reaktionen auf die Anforderungen für den Aufbau von Kommunikationsverbindungen zu dem B-Teilnehmer daher in dieser Ausführungsform der Erfindung durch den Server 40 bzw, eine in dem Server 40 enthaltene Steuerungsvorrichtung gesteuert. Gleichfalls kann es jedoch auch vorgesehen sein, dass die Steuerungseinheit in dieser Ausführungsform Bestandteil des Kommunikationsendgeräts 20 des B-Teilnehmers ist und die jeweils aktiven Verfügbarkeitsprofile an den Server 40 übermittelt, damit im Bereich des Servers 40 die Verfügbarkeitsinformationen des B-Teilnehmers anhand der aktiven Verfügbarkeitsprofile ermittelt werden können,

Zur Ermittlung der Verfügbarkeitsinformationen des B-Teilnehmers wird anhand des aktiven Verfügbarkeitsprofils des B-Teilnehmers bestimmt, im Rahmen welcher Kommunikationsdienste Sprach- und/oder Datennachrichten aufgrund einer Anforderung des A-Teilnehmers für den Aufbau einer Kommunikationsverbindung zu dem B-Teilnehmer weitergeleitet werden. Die Kommunikationsdienste, für die dies der Fall ist, entsprechen den Kommunikationsdiensten, in deren Rahmen der B-Teilnehmer für den A-Teilnehmer erreichbar ist. Die Kommunikationsdienste, für die dies nicht der Fall ist, entsprechen den Kommunikationsdiensten, in deren Rahmen der B-Teilnehmer für den A-Teilnehmer nicht erreichbar ist. Die auf diese Weise ermittelten Verfügbarkeitsinformationen für den B-Teilnehmer umfassen Angaben der Kommunikationsdienste, in deren Rahmen der B-Teilnehmer für den A-Teilnehmer erreichbar ist. Die Verfügbarkeitsinformationen können daher als eine Liste dargestellt werden, in der die Kommunikationsdienste angegeben werden, in deren Rahmen der A-Teilnehmer aktuell eine Kommunikationsverbindung zu dem B-Teilnehmer aufbauen kann. Falls der Aufbau einer Kommunikationsverbindung zwar möglich, jedoch nicht gewünscht ist, wird ein entsprechender Eintrag in die Liste aufgenommen, Es kann auch vorgesehen sein, dass die Verfügbarkeitsinformationen für einen bestimmten Kontakt Angaben der Kommunikationsdienste enthalten, in deren Rahmen der Kontakt für den A-Teilnehmer nicht erreichbar ist. In diesem Fall können die Verfügbarkeitsinformationen in Form einer zweispaltigen Tabelle dargestellt werden, wobei in einer Spalte der Tabelle die von dem Kommunikationsnetzwerk 30 bereitgestellten Kommunikationsdienste aufgeführt sind, und in einer weiteren Spalte jeweils eine Angabe enthalten ist, ob der B-Teilnehmer im Rahmen des betreffenden Kommunikationsdienstes erreichbar ist. Falls eine diesbezüglich Angabe vorhanden ist, wird zudem angegeben, ob der Aufbau einer Kommunikationsverbindung gewünscht ist.

Darüber hinaus kann es vorgesehen sein, dass die Verfügbarkeitsinformationen Angaben über die Entgelte enthalten, die für den Aufbau einer Kommunikationsverbindung zu dem B-Teilnehmer im Rahmen der Kommunikationsdienste anfallen, in deren Rahmen der B-Teilnehmer aktuell erreichbar ist. Anhand der Entgelte kann der A-Teilnehmer bewerten, ob er im Rahmen eines verfügbaren Kommunikationsdienstes eine Kommunikationsverbindung zu dem Kontakt aufbauen möchte. Sind für den Kontakt mehrere Kommunikationsdienste verfügbar, kann der A-Teilnehmer die Entgeltinformationen bei der Auswahl eines Kommunikationsdienstes heranziehen.

Ferner sieht eine Ausgestaltung der Erfindung vor, dass für die Kontakte in der Kontaktliste des A-Teilnehmers ein Verfügbarkeitszustand anhand der Verfügbarkeitsinformationen ermittelt wird. Der Verfügbarkeitszustand entspricht einer Kurzfassung der Verfügbarkeitsinformationen und kann vorzugsweise die Werte "verfügbar", "teilweise verfügbar" und "nicht verfügbar" annehmen. Insbesondere wird der Verfügbarkeitszustand eines Kontakts auf "verfügbar" gesetzt, wenn der Kontakt im Rahmen jedes innerhalb des Kommunikationsnetzwerks zur Verfügung stehenden Kommunikationsdienstes verfügbar ist und der Aufbau von Kommunikationsverbindungen im Rahmen jedes der Dienste gewünscht ist. Der Verfügbarkeitszustand wird auf "teilweise verfügbar" gesetzt, wenn der Kontakt nur im Rahmen eines Teils der zur Verfügung stehenden Kommunikationsdienste verfügbar ist und im Rahmen eines weiteren Teils der zur Verfügung stehenden Kommunikationsdienste nicht verfügbar ist. Ferner wird der Verfügbarkeitszustand auf "teilweise verfügbar" gesetzt, wenn im Rahmen eines oder mehrer Kommunikationsdienste zwar eine Kommunikationsverbindung zu dem Kontakt aufgebaut werden kann, der Aufbau einer derartigen Kommunikationsverbindung jedoch von dem aktuellen Kontakt nicht gewünscht wird. Wenn kein Kommunikationsdienst zur Verfügung steht, in dessen Rahmen der Kontakt erreichbar ist, kann der aktuelle Verfügbarkeitszustand des Kontakts beispielsweise auf "nicht verfügbar" gesetzt werden,

Die Verfügbarkeitsinformationen und/oder der Verfügbarkeitszustand des B-Teilnehmers werden an das Kommunikationsendgerät 10 des A-Teilnehmers übermittelt, falls für den B-Teilnehmer ein Eintrag in einer Kontaktliste des A-Teilnehmers enthalten ist. Innerhalb der Kontaktliste des A-Teilnehmers, die im Rahmen einer entsprechenden Funktionalität des Kommunikationsendgeräts 10 des A-Teilnehmers verwaltet wird, wird einer Person analog zu der Kontaktliste des B-Teilnehmers jeweils ein Eintrag zugeordnet, der den Namen der Person sowie die für einen oder mehrere Kommunikationsdienste maßgeblichen Kontaktdaten der Person umfasst.

Die Übermittlung der Verfügbarkeitsinformationen und/oder des Verfügbarkeitszustands des B-Teilnehmers an das Kommunikationsendgerät 10 des A-Teilnehmers erfolgt in einer Ausgestaltung der Erfindung aufgrund einer entsprechenden Anforderung, die von dem Kommunikationsendgerät 10 des A-Teilnehmers über das Kommunikationsnetzwerk 30 an den Server 40 gesendet wird. Die Aufforderung beinhaltet vorgegebene Kontaktdaten des B-Teilnehmers, die eine Identifizierung des B-Teilnehmers und die Bestimmung des aktuellen Verfügbarkeitsprofils des B-Teilnehmers im Bereich des Servers ermöglichen. Für den Empfang der von dem Server 40 gesendeten Verfügbarkeitsinformationen verfügt das Kommunikationsendgerät 10 des A-Teilnehmers über eine entsprechende Schnittstelle.

Der Verfügbarkeitszustand des B-Teilnehmers wird vorzugsweise innerhalb der Kontaktliste des A-Teilnehmers an der Anzeigeeinrichtung des Kommunikationsendgeräts 20 des A-Teilnehmers dargestellt. Hierbei kann es beispielsweise vorgesehen sein, dass der aktuelle Verfügbarkeitszustand neben dem Namen des B-Teilnehmers in Form eines Textes oder als Symbol dargestellt ist. Nach dem Öffnen der Kontaktliste können dabei die Verfügbarkeitszustände aller in der Kontaktliste aufgeführten Personen neben den Namen der Personen angezeigt werden. Hierfür übermittelt das Kommunikationsendgerät 10 des A-Teilnehmers beispielsweise beim Öffnen der Kontaktliste oder in regelmäßigen Zeitintervallen Aufforderungen zur Übermittlung der Verfügbarkeitszustände aller in der Kontaktliste des A-Teilnehmers enthaltenen Personen an den Server 40.

Die Anzeige der Verfügbarkeitsinformationen einer in der Kontaktliste enthaltenen Person erfolgt vorzugsweise aufgrund einer entsprechenden Auswahl des dieser Person zugeordneten Eintrags der Kontaktliste mittels der Eingabeeinrichtung des Kommunikationsendgeräts 10 des A-Teilnehmers. Aufgrund der Auswahl wird eine Ansicht an der Anzeigeeinrichtung des Kommunikationsendgeräts 10 erzeugt, welche die Verfügbarkeitsinformationen der Person enthält. Eine Aufforderung zur Übermittlung der Verfügbarkeitsinformationen der Person wird in einer Ausführungsform aufgrund der zuvor beschriebenen Auswahl der Person in der Kontaktliste generiert und an den Server 40 gesendet.

Anhand der Verfügbarkeitsinformationen erhält der A-Teilnehmer Kenntnis darüber, auf welche Weise er eine Kommunikationsverbindung zu einer Person aufbauen kann und wird in die Lage versetzt, einen Kommunikationsdienst auszuwählen, in dessen Rahmen die Person aktuell erreichbar ist. Ist in dem aktiven Verfügbarkeitsprofil der Person beispielsweise festgelegt, dass Sprachanrufe nicht an das Kommunikationsendgerät der Person weitergeleitet werden, dass jedoch SMS-Nachrichten an das Kommunikationsendgerät der Person weitergeleitet werden, kann der A-Teilnehmer eine SMS-Nachricht an den Kontakt senden, ohne zuvor einen vergeblichen Kommunikationsversuch anhand eines Sprachanrufs zu unternehmen.

Ein Beispiel für einen Kommunikationsvorgang im Rahmen der der vorliegenden Erfindung kann in der folgenden Weise angegeben werden: Im Rahmen dieses Beispiels wird angenommen, dass für den B-Teilnehmer das zuvor bereits dargestellte Verfügbarkeitsprofil mit der Bezeichnung "Büro" aktiviert ist. Ferner soll angenommen werden, dass der A-Teilnehmer innerhalb der Kontaktliste des B-Teilnehmers der Kontaktgruppe C mit der Bezeichnung "Freunde" zugeordnet ist. Öffnet der A-Teilnehmer die Kontaktliste an seinem Kommunikationsendgerät 10, so sieht er, dass der Verfügbarkeitszustand des B-Teilnehmers auf "teilweise verfügbar" gesetzt ist. Anhand eines Aufrufs der Verfügbarkeitsinformationen des B-Teilnehmers stellt der A-Teilnehmer fest, dass der B-Teilnehmer aktuell im Rahmen eines Sprachanrufs nicht erreichbar ist, dass jedoch Datennachrichten an das Kommunikationsendgerät 20 des B-Teilnehmers weitergeleitet werden. Es wird angenommen, dass der A-Teilnehmer sich dennoch dafür entscheidet, den B-Teilnehmer anzurufen. Aufgrund des Empfangs der entsprechenden Anforderung des A-Teilnehmers für den Aufbau eines Anrufs wird die Anforderung abgewiesen. Zudem wird automatisch eine SMS-Nachricht an den A-Teilnehmer gesendet, in der diesem mitgeteilt wird, dass der B-Teilnehmer aktuell nicht erreichbar ist. Ferner erhält der B-Teilnehmer eine Benachrichtigung über den Anruf des A-Teilnehmers.

## Patentansprüche

1. Verfahren zum Steuern eines durch einen A-Teilnehmer angeforderten Aufbaus einer Kommunikationsverbindung zu einem B-Teilnehmer innerhalb eines mehrere Kommunikationsdienste zur Verfügung stellenden Kommunikationsnetzwerks,
**dadurch gekennzeichnet,**
- **dass** anhand von vorgebbaren Reaktionsmodi Reaktionen auf Anforderungen für den Aufbau einer Kommunikationsverbindung zu dem B-Teilnehmer festgelegt werden,
- wobei in Bezug auf unterschiedliche Kommunikationsdienste verschiedene Reaktionsmodi festgelegt werden können, und
- **dass** aufgrund einer Anforderung des A-Teilnehmers für den Aufbau einer Kommunikationsverbindung zu dem B-Teilnehmer im Rahmen eines Kommunikationsdienstes der für diesen Kommunikationsdienst maßgebliche Reaktionsmodus ermittelt wird und
- **dass** auf die Anforderung für den Aufbau der Kommunikationsverbindung zu dem B-Teilnehmer nach Maßgabe des ermittelten Reaktionsmodus reagiert wird.

2. Verfahren nach Anspruch 1,
**dadurch gekennzeichnet,**
**dass** in Bezug auf einen Kommunikationsdienst verschiedene Reaktionsmodi festgelegt werden können, wobei ein Reaktionsmodus nach Maßgabe wenigstens eines vorgebbaren Kriteriums aktiviert wird.

3. Verfahren nach Anspruch 1 oder 2,
**dadurch gekennzeichnet,**
**dass** in Bezug auf mehrere verschiedene Kommunikationsdienste festgelegte Reaktionsmodi innerhalb eines Verfügbarkeitsprofils zusammengefasst sind, wobei ein Verfügbarkeitsprofil nach Maßgabe eines gemeinsamen Kriteriums aktiviert werden.

4. Verfahren nach einem der vorangegangenen Ansprüche,
**dadurch gekennzeichnet,**
**dass** ein Reaktionsmodus in Abhängigkeit von einer Identität des A-Teilnehmers und/oder einer Zugehörigkeit des Teilnehmers zu einer vorgegebenen Teilnehmergruppe aktiviert wird.

5. Verfahren nach einem der vorangegangenen Ansprüche,
**dadurch gekennzeichnet,**
**dass** ein Reaktionsmodus und/oder ein Verfügbarkeitsprofil in Abhängigkeit von einem aktuellen Wochentag und/oder einer aktuellen Tageszeit aktiviert wird.

6. Verfahren nach einem der vorangegangenen Ansprüche,
**dadurch gekennzeichnet,**
**dass** ein Reaktionsmodus und/oder ein Verfügbarkeitsprofil in Abhängigkeit von einer räumlichen Position des Kommunikationsendgeräts des B-Teilnehmers aktiviert wird.

7. Verfahren nach einem der vorangegangenen Ansprüche,
**dadurch gekennzeichnet,**
**dass** ein Reaktionsmodus und/oder ein Verfügbarkeitsprofil aufgrund einer an einem Kommunikationsendgerät des B-Teilnehmers vorgenommenen Bedienaktion aktiviert wird.

8. Verfahren nach einem der vorangegangenen Ansprüche,
**dadurch gekennzeichnet,**
**dass** ein Reaktionsmodus in Abhängigkeit eines Inhalts von Daten aktiviert wird, deren Übertragung an den B-Teilnehmer im Rahmen des Kommunikationsdienstes, auf den sich die Anforderung bezieht, erfolgen soll.

9. Verfahren nach einem der vorangegangenen Ansprüche,
**dadurch gekennzeichnet,**
**dass** einem Geräteprofil des Kommunikationsendgeräts des B-Teilnehmers ein Reaktionsmodus zugeordnet ist, und dass der Reaktionsmodus aktiviert wird, wenn das Gerätprofil aktiviert wird,

10. Verfahren nach einem der vorangegangenen Ansprüche,
**dadurch gekennzeichnet,**
**dass** mehrere Reaktionsmodi und/oder Verfügbarkeitsprofile im Bereich eines mit dem Kommunikationsnetzwerk verbundenen Servers gespeichert sind.

11. Verfahren nach einem der vorangegangenen Ansprüche,
**dadurch gekennzeichnet,**
**dass** einem Verfügbarkeitsprofil ein Geräteprofil eines Kommunikationsendgeräts des B-Teilnehmers zugeordnet ist, wobei das Verfügbarkeitsprofil und das Gerätprofil synchron aktiviert werden.

12. Verfahren nach einem der vorangegangenen Ansprüche,
**dadurch gekennzeichnet,**
**dass** einem Reaktionsmodus, der als Reaktion auf eine Anforderung zum Aufbau einer Kommunikationsverbindung zu dem B-Teilnehmer den Aufbau der Kommunikationsverbindung zu dem B-Teilnehmer vorsieht, eine Angabe darüber zugeordnet werden kann, ob der Aufbau der Kommunikationsverbindung gewünscht ist.

13. Verfahren nach einem der vorangegangenen Ansprüche,
**dadurch gekennzeichnet,**
**dass** anhand wenigstens eines sich auf einen Kommunikationsdienst beziehenden aktiven Reaktionsmodus eine Verfügbarkeitsinformation in Bezug auf diesen Kommunikationsdienst ermittelt wird, wobei die Verfügbarkeitsinformation angibt, ob im Rahmen des Kommunikationsdienstes eine Kommunikationsverbindung zu dem B-Teilnehmer aufgebaut werden kann und/oder ob der Aufbau einer Kommunikationsverbindung zu dem B-Teilnehmer gewünscht ist, dass die Verfügbarkeitsinformation an ein Kommunikationsendgerät des A-Teilnehmers gesendet wird und dass die Verfügbarkeitsinformation an dem Kommunikationsendgerät des A-Teilnehmers angezeigt werden kann,

14. Verfahren nach einem der vorangegangenen Ansprüche,
**dadurch gekennzeichnet,**
**dass** anhand der in einem aktiven Verfügbarkeitsprofil enthaltenen Reaktionsmodi ein Verfügbarkeitszustand des B-Teilnehmers ermittelt wird, wobei der Verfügbarkeitszustand angibt, ob der Aufbau einer Kommunikationsverbindung zu dem B-Teilnehmer im Rahmen aller von dem Kommunikationsnetzwerk zur Verfügung gestellten Kommunikationsdienste, im Rahmen eines Teils der der von dem Kommunikationsnetzwerk zur Verfügung gestellten Kommunikationsdienste oder im Rahmen keines der von dem Kommunikationsnetzwerk zur Verfügung gestellten Kommunikationsdienste möglichst und/oder gewünscht ist, dass der Verfügbarkeitszustand des B-Teilnehmers an ein Kommunikationsendgerät des A-Teilnehmers gesendet wird und dass der Verfügbarkeitszustand des B-Teilnehmers an dem Kommunikationsendgerät des A-Teilnehmers angezeigt werden kann.

15. Verfahren nach einem der vorangegangenen Ansprüche,
**dadurch gekennzeichnet,**
**dass** die Verfügbarkeitsinformation und/oder der Verfügbarkeitszustand des B-Teilnehmers an das Kommunikationsendgerät des A-Teilnehmers gesendet wird, wenn der B-Teilnehmer in einer in dem Kommunikationsendgerät des A-Teilnehmers gespeicherten Kontaktliste des A-Teilnehmers aufgeführt ist.

16. Computerprogrammprodukt,
**dadurch gekennzeichnet,**
**dass** es ein Computerprogramm zum Ausführen eines Verfahrens nach einem der vorangegangenen Ansprüche umfasst.

17. Einrichtung zum Steuern eines Aufbaus einer Kommunikationsverbindung zu einem B-Teilnehmer innerhalb eines mehrere Kommunikationsdienste zur Verfügung stellenden Kommunikationsnetzwerks durch einen A-Teilnehmer,
**dadurch gekennzeichnet,**
- **dass** sie dazu ausgebildet ist, vorgebbare Reaktionsmodi zu speichern, wobei die Reaktionsmodi Reaktionen auf Anforderungen für den Aufbau einer Kommunikationsverbindung zu dem B-Teilnehmer festlegen und
- wobei in Bezug auf unterschiedliche Kommunikationsdienste verschiedene Reaktionsmodi speicherbar sind, und
- **dass** sie dazu ausgebildet ist, aufgrund einer Anforderung des A-Teilnehmers für den Aufbau einer Kommunikationsverbindung zu dem B-Teilnehmer im Rahmen eines Kommunikationsdienstes den für diesen Kommunikationsdienst festgelegten Reaktionsmodus zu ermitteln und
- **dass** sie dazu ausgebildet ist, eine Reaktion auf die Anforderung für den Aufbau der Kommunikationsverbindung zu dem B-Teilnehmer nach Maßgabe des ermittelten Reaktionsmodus zu steuern.

18. Einrichtung nach Anspruch 17,
**dadurch gekennzeichnet,**
**dass** sie dazu ausgebildet ist, anhand wenigstens eines sich auf einem Kommunikationsdienst beziehenden Reaktionsmodus eine Verfügbarkeitsinformation in Bezug auf diesen Kommunikationsdienst zu ermitteln, wobei die Verfügbarkeitsinformation angibt, ob im Rahmen des Kommunikationsdienstes eine Kommunikationsverbindung zu dem B-Teilnehmer aufgebaut werden kann, und dass sie dazu ausgebildet ist, die Verfügbarkeitsinformation an ein Kommunikationsendgerät des A-Teilnehmers zu senden.

19. Kommunikationsendgerät,
**dadurch gekennzeichnet,**
**dass** es eine Schnittstelle für einen Empfang einer Verfügbarkeitsinformation umfasst, die von einer Einrichtung nach Anspruch 18 gesendet wird, und dass es eine Anzeigeeinrichtung zur Darstellung der Verfügbarkeitsinformation umfasst.
